# EUROPEAN PATENT APPLICATION

(11) **EP 4 843 529 A1**
(43) Date of publication of application: **25.11.2026**
(21) Application number: 26179661.9
(22) Date of filing: 19.05.2026
(51) Int. Cl.: A61C 5/77, A61C 13/00, B33Y 10/00, B33Y 80/00

(54) **SYSTEMS AND METHODS FOR PRINTING DENTAL RESTORATIONS**

(30) Priority: 23.05.2025 US 202519217965
(71) Applicant: Zetta25 AG, 8047 Zurich (CH)
(72) Inventor: SCHNEIDER, Hans-Christian, 64683 Einhausen (DE); SCHAEFER, Andreas, Bensheim (DE)
(74) Representative: Aldridge, Henry Alexander

(57) **Abstract**

Methods and systems are provided for three-dimensional printing a dental restoration. In the methods and using the systems, a first part of the dental restoration is printed with strands of material having a first cross-sectional area, and a second part of the dental restoration is printed with strands of material having a second cross-section area, with the second cross-section area being greater than the first cross-sectional area. The first part of the dental restoration may be an aesthetic part of the dental restoration, and the second part of the dental restoration is a non-aesthetic part of the dental restoration. The dental restoration can thereby be printed both quickly and such that aesthetic parts of the dental restoration are precise and detailed.

## Description

### BACKGROUND

### Field of the Invention

Embodiments of the invention relate to systems and methods for three-dimensional printing of a dental restoration where aesthetic and non-aesthetic parts of the dental restoration are printed differently.

### Related Art

Dental restoration procedures are commonplace in dentistry for repairing and replacing damaged or decayed teeth, restoring their function, appearance, and structural integrity. Common types of dental restorations include crowns, bridges, inlays, onlays, and veneers. Crowns encase a tooth to protect the tooth after extensive damage or root canal treatment. Bridges replace one or more missing teeth by anchoring to adjacent teeth, restoring the bite and preventing teeth from shifting. Inlays and onlays fill larger cavities and provide strength and durability. Advances in dental materials have made restorations more natural-looking, blending seamlessly with the surrounding teeth. These restorations not only improve oral health and functionality but also enhance aesthetic appeal, supporting long-term dental health and patient confidence.

Dental restorations are often made by three-dimensional (3D) printing. 3D printing creates a dental restoration by printing layer by layer based on a digital model of the dental restoration. The 3D printer extrudes material through a heated nozzle, with the material being melted as it is pushed through the nozzle and then cooling and solidifying to form each layer. The printer constructs the dental restoration strand by strand within each layer, following a toolpath as defined by the digital model of the dental restoration.

The feed rate, or the rate at which material is pushed through a nozzle of the 3D printer, plays a critical role in determining the thickness and width of strands that make up the finally printed dental restoration. A higher feed rate results in thicker, wider strands, which can be printed relatively quickly. On the other hand, a slower feed rate produces thinner strands, which can improve precision and provide for finer details, but such a slower feed rate results in a longer time to complete the printing process. Additionally, the strand width depends on the nozzle diameter.

### SUMMARY OF THE INVENTION

According to some embodiments of the invention, a method is provided for printing a dental restoration. The method includes printing a first part of the dental restoration with strands of material having a first cross-sectional area. The method also includes printing a second part of the dental restoration with strands of material having a second cross-section area, with the second cross-section area being greater than the first cross-sectional area. Hence, the dental restoration is one unitary part with at least two different portions printed with different cross-sectional areas. Within the context of the present disclosure, the terms "first part" and "second part" may also be interchangeably referred to as "first portion" and "second portion". In this method, the first part of the dental restoration may be an aesthetic part of the dental restoration, and the second part of the dental restoration is a non-aesthetic part of the dental restoration.

The first part is thus a part which is printed with a higher printing resolution than the second part. The first part is preferably a visible part of the dental restoration, whereby it corresponds to an external surface in relation to the shape of an original or desired outer surface of at least one tooth. The second part is preferably an invisible part of the dental restoration, whereby it corresponds to an internal portion of at least one tooth. In an embodiment, a portion located under the gums which constitutes a hidden surface may be considered as a first part. In such a way, the preparation margin may be more precisely controlled. In an embodiment, the method may further include printing a plurality of high printing resolution and low printing resolution parts of the dental restoration.

According to further embodiments of the invention, a system is provided for printing a dental restoration. The system comprises a three-dimensional printing device comprising a first nozzle and a second nozzle. The system further comprises at least one processor configured to read out and execute instructions stored in at least one memory to thereby cause the processor direct to the system to print a first part of the dental restoration using the first nozzle and print a second part of the dental restoration using the second nozzle. The first part of the dental restoration is an aesthetic part of the dental restoration, and the second part of the dental restoration is a non-aesthetic part of the dental restoration.

According to further embodiments of the invention, a system is provided for printing a dental restoration. The system includes a three-dimensional printing device comprising a first nozzle and a second nozzle. The system further includes at least one processor configured to read out and execute instructions stored in at least one memory to thereby cause the processor direct to the system to segment at least one aesthetic area in a digital model of the dental restoration and at least one non-aesthetic area in the digital model, print the at least one aesthetic area of the dental restoration with a first feed rate of material through the first nozzle, and print the at least one non-aesthetic area of the dental restoration at a second feed rate of material through the second nozzle, with the second feed rate being greater than the first feed rate.

### BRIEF DESCRIPTION OF THE DRAWINGS

FIG. 1 is a conceptual view of a system according to an embodiment of the invention.
FIGS. 2A and 2B are illustrations of a printed inlay dental restoration according to an embodiment of the invention.
FIGS. 3A-3C show steps of printing an inlay according to an embodiment of the invention.
FIGS. 4A-4C show steps of printing a crown according to an embodiment of the invention.
FIG. 5 is a flow chart of a method according to an embodiment of the invention.

It should be noted that to facilitate understanding of the disclosure, in some instances the drawings may not be to actual scale and the dimensions and orientations of some components may be exaggerated.

### DETAILED DESCRIPTION OF THE INVENTION

Embodiments of the invention relate to systems and methods for three-dimensional printing of a dental restoration where aesthetic and non-aesthetic parts of the dental restoration are printed differently. Specific embodiments of the invention will now be described. However, it will be understood by those skilled in the art that the invention is not limited to the specifically described embodiments, and that the structures and features expressly described herein can be modified or varied in numerous ways.

A dental restoration is a fabricated structure used to repair, replace, or restore the function, integrity, and aesthetics of a damaged, decayed, or missing tooth. Examples of dental restorations include crowns, bridges, inlays, onlays, dentures, and implant-supported prosthetics, which are custom-made outside the mouth before placement. Dental restorations help maintain oral health, improve chewing function, and enhance the appearance of a patient's smile. In the embodiments described herein, dental restorations are made by 3D printing. Those skilled in the art will appreciate the techniques and materials used in 3D printing of dental restorations.

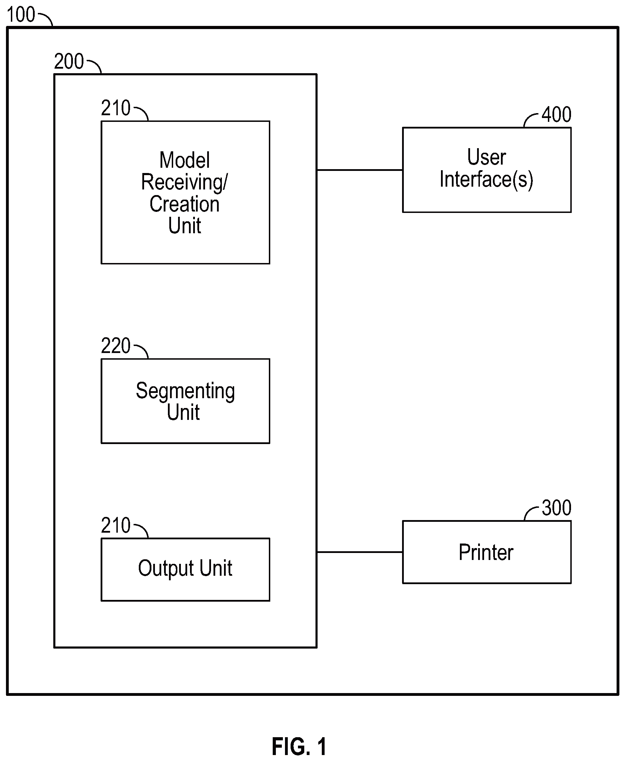

Figure 1 is a conceptual view of a system 100 according to an embodiment of the invention. The system 100 includes a computer 200, a three-dimensional printer 300, and one or more user interfaces 400. In some embodiments of the invention, one or more of the components of the system 100 are integrated into a single piece of hardware. For example, the computer 200 and the three-dimensional printer 300 may be integrated into a single apparatus. But in other embodiments the components of the system 100 are separate structures.

The computer 200 may be a general or special purpose computer. Such computers will typically include a central processing unit (CPU) that includes at least one processor. Such a computer will also typically include additional processing structures, such as graphical processor of a graphical processing unit (GPU). The one or more processors are coupled to one or more memory structures, which may be random access memory (RAM) devices, cache memories, non-volatile or backup memories, read-only memories, etc. In addition, the memory may include memory storage physically located elsewhere in computer, e.g., any cache memory in a processor, as well as any storage capacity used as a virtual memory, e.g., as stored in a mass storage device or in another computer coupled to the computer 200.

The computer 200 will also typically include at least one communication interface comprising a number of input and output components for communicating with external devices. Such a communication interface can be provided with a wide variety of technologies. The communication interface components may be operable to couple the computer 200 to a network or devices. For example, the communication interface may include wired communication components, wireless communication components, cellular communication components, Near Field Communication (NFC) components, BLUETOOTH^{®} components, WIFI^{®} components, and other communication components to provide communication via other modalities. In embodiments of the invention, input and/or output components of the communication interface provide for communication with the three-dimensional printer 300 and the user interface(s) 400.

The computer 200 may further include a data storage device. The data storage device is configured to record data persistently, where "persistently" or "persistent" refers as to a device's ability to maintain recorded data after loss of power. In some embodiments, the data storage device may correspond to non-disk storage media. For example, the data storage device may be one or more solid-state drives (SSDs), flash memory-based storage, any type of solid-state non-volatile memory, or any other type of non-mechanical storage device. In other implementations, the data storage device may include mechanical or spinning hard disk, such as hard-disk drives (HDD).

As an alternative to including the data storage device, or in addition to the data storage device, in embodiments the computer 200 is operatively linked to a data storage device that is physically separated from the structure of computer 200. For example, an input/output component of the communication interface of the computer 200 may be connected to a network through which the computer 200 receives data from an external data storage device.

It should be noted that a distributed computer system could be used to provide the functions of the computer 200 described herein. One example of a distributed computer system is a cloud-based architecture. As will be appreciated by those skilled in the art, cloud computing is the delivery of services-such as servers, storage, databases, networking, software, analytics, and intelligence-over the internet ("the cloud").

The computer 200 is operatively connected to the three-dimensional printer 300. The 3D printer fabricates precise, custom dental restorations using, for example, digital scans and computer-aided design/computer-aided manufacturing (CAD/CAM) technology. The dental restorations printed by the 3D printer may be formed from biocompatible resins, ceramics, or metal powders to create highly accurate and durable restorations.

Generally speaking, the printing process with the 3D printer starts by creating a digital model of the dental restoration to be fabricated. Such a model is often designed using CAD software. The model is then converted into a file format, such as stereolithography (STL) format, which represents the object as a series of triangular surfaces. To prepare for printing, the STL file is processed through slicing software, which divides the 3D model into thin horizontal layers. This slicing software also determines the printer's toolpath, which is the precise path that the printer's nozzle(s) will follow to lay down material. The toolpath includes information about how much material to extrude, the speed of movement, and when to lift or lower the print head. In particular, as will be described below, the toolpath information in the digital model will include information on how large of cross-sectional strands should be printed in different parts of the dental restoration based on a segmentation of the digital model into aesthetic and non-aesthetic parts.

The 3D printer uses the instructions in the file format of the digital model to extrude the one or more materials through its nozzle(s). The material is melted as it is pushed through a nozzle, and as it cools, it solidifies to form layers that make up the dental restoration being printed. The printer constructs the dental restoration strand by strand within each layer, following the predefined toolpath. The strands are laid side by side, sometimes slightly overlapping, to ensure a continuous surface. Once a layer is complete, the print head moves up or the print bed moves down, depending on the printer design, to start the next layer. This process is repeated until the entire dental restoration is built.

In embodiments of the invention, the 3D printer 300 includes more than one nozzle, with the nozzles having different diameters. As will be described below, the different nozzles are used to print different parts of the dental restoration.

Referring again to Figure 1, the computer 200 is also connected to one or more user interfaces 400. The user interfaces 400 may include one or more user input devices (*e.g.*, a keyboard, a mouse, a trackball, a joystick, a touch pad, and/or a microphone, among others) and a display device (*e.g.*, an LCD display panel). The user interfaces 400 allows a user to control operation of the computer 200. In other embodiments, the computer 200 is operatively linked to another device providing such a user interface. For example, the computer 200 may be connected to a network to which a remote workstation where a user interface is provided.

The computer 200 operates under the control of an operating system and executes or otherwise relies upon various computer software applications, components, programs, objects, units, data structures, etc. Moreover, various applications, components, programs, objects, units, etc. may also execute on one or more processors in another computer coupled to computer 200 via a network, e.g., as in a distributed computer system, whereby the processing required to implement the functions of a computer program may be allocated to multiple computers over a network.

Embodiments of the invention include functional units that reside in memory device(s) of the computer 200. Each of the units is computer-executable code that, when executed by the computer's processors, imparts the unit's functionality to the computer 200. Those skilled in the art will recognize the coding languages and techniques that may be used to create the units. In the embodiment depicted in Figure 1, the computer 200 includes a digital model creation/receiving unit 210, a segmenting unit 220, and an output unit 230.

The digital model creation/receiving unit 210 is configured to receive, create, and/or modify a digital model of the restoration to be printed. For example, the model creation unit 210 creates a digital model of dental restoration using three-dimensional data received by the computer 200. In a particular example, the unit 210 uses algorithms to analyze data from a three-dimensional scan of a prepared tooth to design the model of the dental restoration so that the dental restoration that will ultimately be formed is tailored to the prepared tooth. As will be appreciated by those skilled in the art, embodiments of the digital model creation/receiving unit 210 may be implemented by specialized CAD software that allows the dental professional to work with the restoration model, positioning and sculpting the virtual restoration to match the natural anatomy and aesthetics of the patient's teeth. That is, the digital model creation/receiving unit 210 can receive input from the user for desired aspects of the dental restoration and create the dental restoration model based on the input.

It should be noted that in other embodiments, the digital model creation/receiving unit 210 receives a previously designed digital model of the dental restoration. For example, the digital model may be designed using another computer system and then sent to the computer 200 for the printing process.

The segmenting unit 220 is configured to segment the digital model of the dental restoration into first and second parts. In an example, the first part(s) corresponds to part(s) that need to be printed with greater precision, such as an aesthetic part(s) of the dental restoration and the second part(s) corresponds to part(s) that do not need to be printed as precisely as the first parts, such as a non-aesthetic part(s) of the dental restoration. As will be described below, the first and second parts of the dental restoration are printed differently using a 3D printer according to embodiments of the invention. As used herein, an aesthetic part of a dental restoration is a part that can be easily seen when the dental restoration is fixed in an oral cavity. Examples of aesthetic parts of a dental restoration include the preparation line, contact points, occlusal surfaces, and fissures. On the other hand, a non-aesthetic part of a dental restoration is a part that cannot be easily seen when the dental restoration is fixed in an oral cavity. This includes, for example, a bulk part below the outer surfaces of the dental restoration. In an embodiment, an aesthetic part can be an external surface which mimics the shape of a tooth.

In the descriptions that follow, the first segmented and printed part will be described as an aesthetic part, and the second segmented and printed part will be described as an non-aesthetic part. However, embodiments of the invention are not limited to distinguishing the parts as aesthetic and non-aesthetic parts. For example, the first and second parts could be based on different functional requirements in the dental restoration. In a specific example, the first part corresponds to an abutment and the second part corresponds to a main body of the dental restoration other than the abutment.

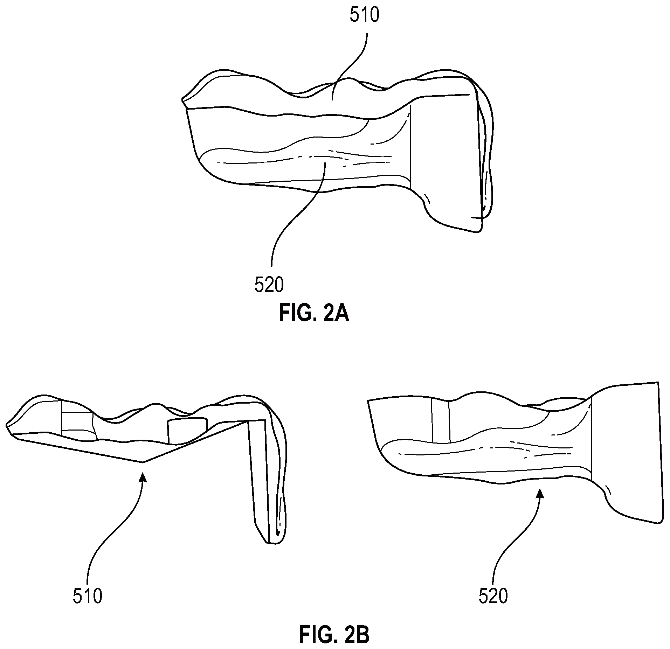

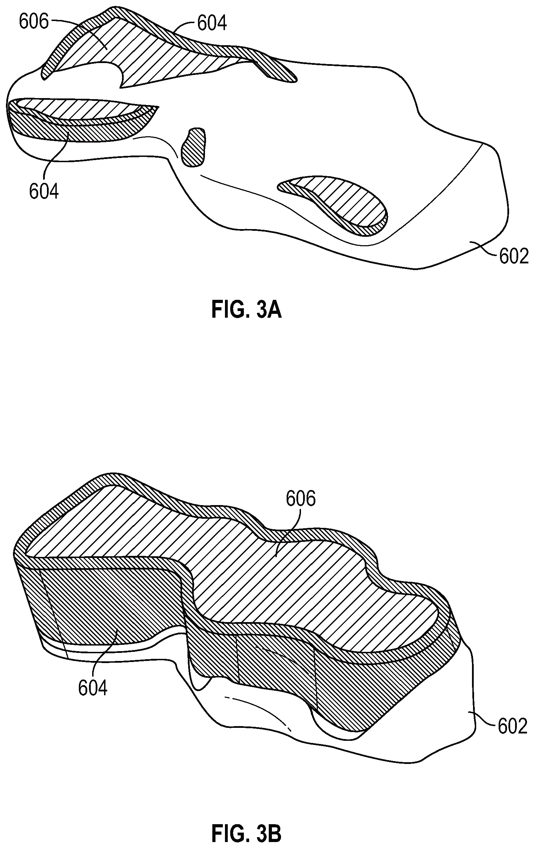

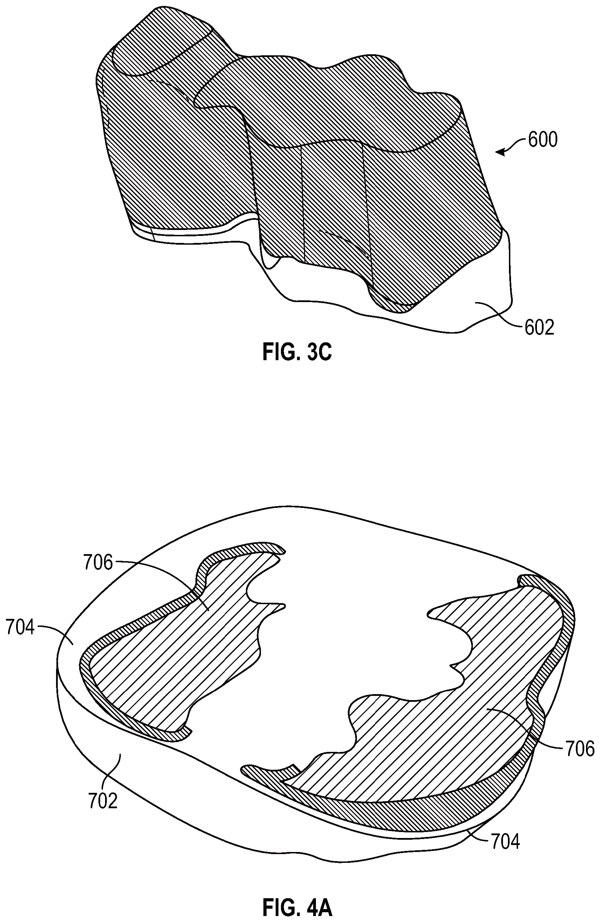

An inlay restoration is shown in Figures 2A and 2B. The inlay restoration includes an aesthetic part 510 and a non-aesthetic part 520. For illustrative purposes, the two parts 510 and 520 are shown separately in Figure 2A. Figure 3 shows the two parts 510 and 520 together as they are printed by a 3D printer. The aesthetic part 510 forms an upper and outer part of the restoration which is visible in an oral cavity. The non-aesthetic part 520 forms the bulk of the restoration that is obscured in the oral cavity. As described herein, the two parts 510 and 520 are printed differently by the 3D printer.

Figures 3A-3C show progressive steps of 3D printing an inlay restoration 600 according to embodiments of the invention. A 3D printer system as described herein may be used to print the inlay 600 according to a digital model of the inlay 600, as described above. The digital model may be segmented to defined aesthetic parts 604 and the non-aesthetic parts 606 of the inlay 600, as will be described below.

In the depicted printing process, the inlay 600 is formed upside down such that the occlusion of the inlay 600 is formed first, *i.e.*, at the bottom of the inlay 600 as printed by the printer. At the start of the printing process, a support material 602 is positioned in the printer to provide a base upon which the inlay 600 is printed. The support material 602 does not form a part of the inlay 600; rather, the support material 602 is removed from the inlay 600 at the completion of the printing process.

The aesthetic parts 604 and the non-aesthetic parts 606 of the inlay 600 are printed differently by the system. The aesthetic parts 604 are printed with strands of material having a small cross-sectional area, whereas the non-aesthetic parts 606 are printed with strands of material having a larger cross-sectional area. Thus, the non-aesthetic parts 606 may be printed more quickly than the aesthetic parts 604. But, by being formed with smaller strands, the printing resolution is finer for the aesthetic parts 604. And, thus, the details of the aesthetic parts 604 are more precise than in the non-aesthetic parts 606. The result is that the printing process is quicker as comparted to a printing process wherein only small strands of material are printed, but the printed dental restoration has finer and more precise details in the aesthetic parts as compared to a printing process where only large strands of material are printed.

To form the differently sized strands of materials, the aesthetic parts 604 and the non-aesthetic parts 606 may be printed by different nozzles of the printer. More specifically, the aesthetic parts 604 may be printed by a first nozzle of the printer, and the non-aesthetic parts 606 may be printed by a second nozzle of the printer, with a diameter of the first nozzle being smaller than a diameter of the second nozzle. Note, the designations of "first" and "second" nozzles are used only to distinguish the two different nozzles and do not necessarily indicate an order that the nozzles are used. In a specific example, the diameter of the first nozzle may be 160 µm or less and the diameter of the second nozzle is 500 µm or more.

In another embodiment, the differently sized strands of materials are printed by using different material extrusion rates while the printing nozzle moves at a constant speed. For example, the first part can be printed at a first extrusion rate and the second part can be printed at a second extrusion rate that is greater than the first extrusion rate. Thus, the strands of the second part are larger than the strands of the first part.

As the second nozzle used to print the non-aesthetic parts is larger than the first nozzle used to print the aesthetic parts of the dental restoration, the feed rate of material through the second nozzle is faster, which in turn speeds up the dental restoration fabrication process. In the case of printing an inlay as depicted in Figure 3 with the combination of a 160 µm first nozzle and a 500 µm second nozzle, it was found that the total time for dispensing the inlay material was 23% faster than when the same inlay was printed using only a 160 µm nozzle. Further, the total time of printing and curing the inlay was 15% faster when using the combination of the 160 µm first nozzle and the 500 µm second nozzle as compared to printing the inlay using only a 160 µm nozzle.

In another embodiment, different resin temperatures for the first part and second part can be used to achieve the different printing resolutions. In a further embodiment, a variable size nozzle can be used in order to achieve strands of different widths.

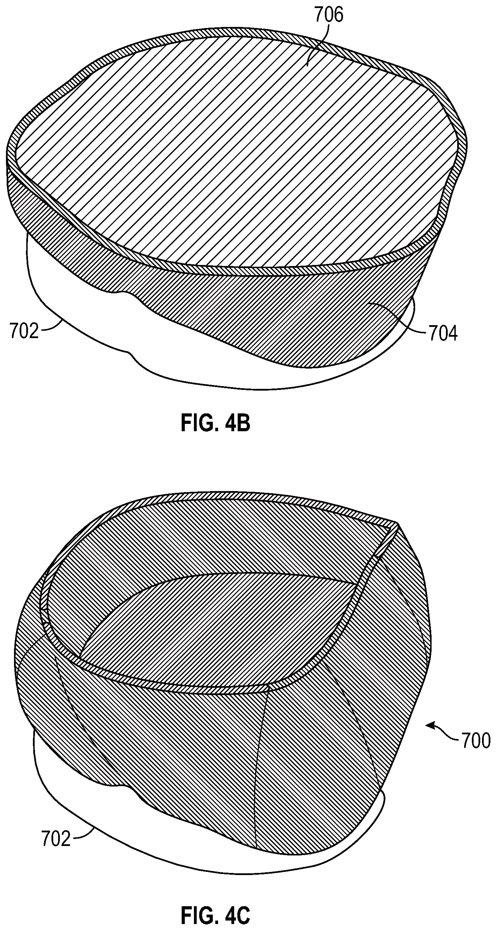

Figures 4A-4C show progressive steps of printing a crown restoration 700 on a support 702 using a 3D printer system according to embodiments of the invention. As with the embodiments wherein an inlay restoration is printed, the 3D printer system may print the crown 700 according to a digital model that is segmented to define aesthetic parts 704 and the non-aesthetic parts 706 of the crown 700. Thus, the crown 700 may be printed with smaller strands of material providing precise details in the aesthetic parts, but the printing process is faster by printing larger strands of material in the non-aesthetic parts.

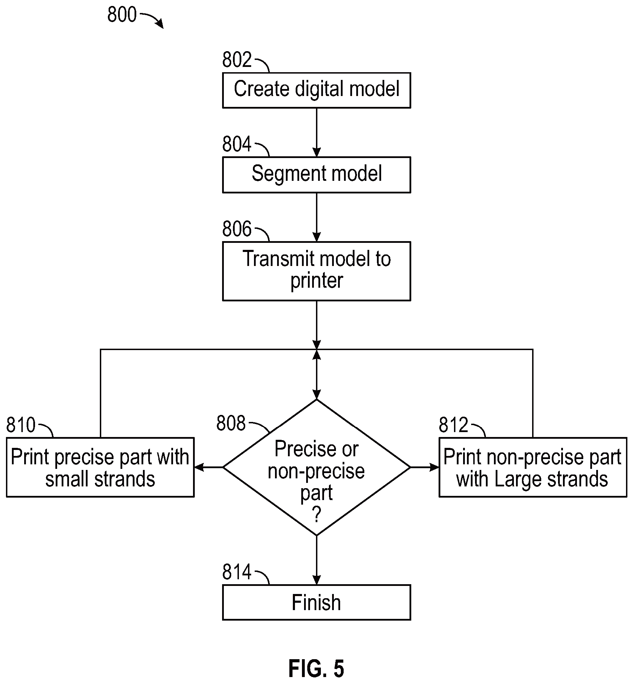

Figure 5 is a flowchart of a method 800 of printing a dental restoration according to embodiments of the invention. The method 800 may be performed using a system as described above, including a computer system that includes a digital model receiving/creation unit to receive and/or create a digital model of the dental restoration and a segmenting unit to designate aesthetic and non-aesthetic parts of the digital model. Alternatively, the aesthetic and non-aesthetic parts may be characterized as precise or non-precise parts.

The method 300 begins with a step 802 of creating a digital model of the dental restoration. As noted above, such a model can be designed using CAD software. The digital model defines the shape of the dental restoration to be printed. The model may be created or transmitted to a computer system as described above.

In step 804, the digital model is segmented into aesthetic parts and non-aesthetic parts. In embodiments of the invention, the segmentation of the digital model is performed automatically by the computer system, in other embodiments the segmentation of the digital model is performed manually by an operator, and in still other embodiments, the segmentation of the digital model is performed automatically by the computer system and is performed manually by an operator. In any of these embodiments, the segmenting unit 220 may be configured to perform the segmentation of the digital model.

Computer-aided recognition algorithms can be used to cause the computer system to automatically segment the digital model into the aesthetic parts and non-aesthetic parts. For example, edge recognition techniques can be used to determine boundaries of shapes and surfaces in the model of the dental restoration. As another example, gradient recognition algorithms can be used to detect changes in surface orientation or texture, enabling the identification of areas that correspond to aesthetic parts. Those skilled in the art will appreciate these and other algorithms that may be used to segment the digital model.

In yet another example, a user many manually segment the digital model. For example, the user may use an interface to provide different colors to the different parts of the model. color recognition algorithms can be used to segment the aesthetic parts and non-aesthetic parts. Those skilled in the art will appreciate other techniques that may be used to manually segment the digital model.

In still further embodiments, the automatic segmentation may be performed by training the computer using classification methods and a neural network. Such techniques involve providing with a large dataset of dental restorations whose parts are identified as aesthetic and non-aesthetic such that the computer can learn how to classify different segments in a digital model of a dental restoration. In a particular example, a neural network, typically a convolutional neural network (CNN), is trained to recognize patterns and features like edges, surfaces, and textures within the model. By learning from the labeled data, the network can then classify and segment different regions of a new, unseen model of a dental restoration, effectively identifying aesthetic and non-aesthetic areas.

In addition to, as an alternative to, automatic segmentation by the computer system, a user may manually identify the aesthetic and non-aesthetic parts in the digital model. For example, the user may use the interface(s) 400 described above to make areas on a display of the digital model of the dental representation as being an aesthetic part or a non-aesthetic part. After such a labeling by a user, the segmented digital model could be used in training for future automatic segmentation, such as in the case where a CNN is used.

Referring again to Figure 5, in step 806, the segmented digital model is transmitted to the 3D printer for printing. At step 808 of the method 800 during the printing process, the printer is instructed to print either an aesthetic part or a non-aesthetic part of the dental restoration. When printing an aesthetic part at step 810, the printer uses a smaller nozzle that prints smaller cross-sectional strands at a lower speed (i.e., lower flow rate of material). Thus, the printer prints the aesthetic parts at a high resolution. When printing a non-aesthetic part at step 812, the printer uses a larger nozzle that prints larger cross-section strands at a higher speed (i.e., higher flow rate of material). Thus, the printing process is sped up as the non-aesthetic parts are printed faster.

In step 814, the method 800 is completed with the dental restoration fully printed. The dental restoration may be placed in a patient's oral cavity by a dental professional.

With the systems and methods described herein, a dental restoration can be 3D printed both quickly and such that aesthetic parts of the dental restoration are precise and detailed. The systems and methods are thereby a significant improvement upon the prior art.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations described herein were chosen and described in order to best explain the principles of embodiments of the invention and its practical applications, to thereby enable others skilled in the art to best utilize embodiments of the invention and various implementations with various modifications as are suited to the particular use contemplated.

## Claims

1. A method of printing a dental restoration, the method comprising:
printing a first part of the dental restoration with strands of material having a first cross-sectional area; and
printing a second part of the dental restoration with strands of material having a second cross-section area, with the second cross-section area being greater than the first cross-sectional area.

2. The method according to claim 1, wherein the first part of the dental restoration is an aesthetic part of the dental restoration, and the second part of the dental restoration is a non-aesthetic part of the dental restoration.

3. The method according to claim 1, wherein the first part of the dental restoration is an interface to an abutment, or to a preparation margin of a remaining tooth, and the second part of the dental restoration is a main body of the dental restoration.

4. The method according to claim 1, wherein the first part is printed with a first nozzle of a printer and the second cross-sectional area is printed with a second nozzle of the printer, with a diameter of the first nozzle being smaller than a diameter of the second nozzle.

5. The method according to claim 4, wherein the diameter of the first nozzle is 160 µm or less and the diameter of the second nozzle is 500 µm or more.

6. The method according to claim 1, wherein the first part is printed at a first extrusion rate and the second part is printed at a second extrusion rate that is greater than the first extrusion rate.

7. The method according to claim 1, further comprising creating a digital model of the dental restoration and segmenting the digital model into the first part and the second part, wherein a three-dimensional printer prints the first and second parts according to the digital model.

8. The method according to claim 7, wherein the digital model is segmented by at least one of a computer-recognition algorithm and a manual selection.

9. The method according to claim 8, wherein the segmenting by the computer-recognition algorithm includes at least one of edge recognition, gradient recognition, or color recognition.

10. The method according to claim 8, wherein the computer-recognition algorithm is developed by using segmented digital restorations to train a neural network.

11. A system for printing a dental restoration, the system comprising:
a three-dimensional printing device comprising a first nozzle and a second nozzle, and
at least one processor configured to read out and execute instructions stored in at least one memory to thereby cause the at least one processor direct to the system to:
print a first part of the dental restoration using the first nozzle; and
print a second part of the dental restoration using the second nozzle.

12. The system for printing a dental restoration according to claim 11, wherein the first part of the dental restoration is an aesthetic part of the dental restoration, and the second part of the dental restoration is a non-aesthetic part of the dental restoration.

13. The system according to claim 11, wherein a diameter of the first nozzle is smaller than a diameter of the second nozzle.

14. The system according to claim 13, wherein the diameter of the first nozzle is 160 µm or less and the diameter of the second nozzle is 500 µm or more.

15. The system for printing a dental according to claim 11, wherein the system is configured to:
segment at least one aesthetic area in a digital model of the dental restoration and at least one non-aesthetic area in the digital model;
print the at least one aesthetic area of the dental restoration with a first feed rate of material through the first nozzle; and
print the at least one non-aesthetic area of the dental restoration at a second feed rate of material through the second nozzle, with the second feed rate being greater than the first feed rate.
